# EUROPEAN PATENT SPECIFICATION

(11) **EP 3 936 418 B1**
(45) Date of publication and mention of the grant of the patent: **31.01.2024**
(21) Application number: 21182269.7
(22) Date of filing: 29.06.2021
(51) Int. Cl.: B62D 55/04, B62D 55/20

(54) **CATERPILLAR TRACK OF WORK MACHINE**
RAUPENKETTE EINER ARBEITSMASCHINE
TRAIN DE ROULEMENT À CHENILLES D'UNE MACHINE DE TRAVAIL

(30) Priority: 06.07.2020 FI 20205728
(43) Date of publication of application: 12.01.2022
(73) Proprietor: Nisula Forest Oy, 35600 Halli (FI)
(72) Inventor: Nisula, Esa, 17800 Kuhmoinen (FI)
(74) Representative: Kolster Oy Ab

(56) References cited:
- DE-C- 699 465
- US-A- 4 099 794
- US-A1- 2005 241 739
- US-A1- 2006 232 130
- US-A1- 2018 194 180

## Description

### Background of the invention

The invention relates to moving work machines, for example forest work machines such as harvesters and forwarders. Forest machines are used to fell and prune trees, to cut a felled tree trunk into pieces of a specific length, and to load and transport timber acquired in the aforementioned method.

Difficult conditions, such as ground with a poor load-bearing capacity or knolls, slopes, or other ascending or descending forms in the terrain are problematic for the ability of the work machine to move and for its stability. To improve the bearing capacity of the work machine or its traction against the ground, it is known to use a caterpillar track or chain track around one or more wheels of the work machine. In a bogie structure, a caterpillar track goes around at least two wheels of a work machine as a continuous loop, but a caterpillar track may be used on a work machine around a single wheel, too.

Depending on the conditions of the terrain, the required friction between a wheel of the work machine and the caterpillar track may be low due to snow or mud, for example. This results in the wheels of the work machine inside the caterpillar track to slip, and the work machine will not move because power is not conveyed all the way to the ground. One of the ways to prevent slipping is to tighten a caterpillar track very tight around the wheels, but it is particularly difficult to tighten a caterpillar track around a single wheel, and over-tightening a caterpillar track in a bogey structures stresses the bogey structure, in particular the bearings of the wheels. In addition, under snow conditions in winter time, an ice layer caused by snow is formed between an inner surface of the caterpillar track and a tyre of a wheel of a work machine, which both adds to the tightness of the caterpillar track and reduces the traction, i.e. the required friction, between the caterpillar track and tyre of the wheel. The layer of ice accumulating on the inner surface of the caterpillar track, so in practice on the inner surface of the grouser shoes of the caterpillar track, increases the risk of damage to the wheel bearings, for example, in a situation where the wheels of the bogie structure of the work machine find themselves in such a way in relation to an obstacle in the terrain, such as a rise, that the obstacle is between the bogie wheels whereby the obstacle causes the caterpillar track to tighten.

Publications US 2006/232130 A1, US 4 099 794 A and DE 699 465 C disclose some examples of caterpillar tracks of work machines.

### Brief description of the invention

An objective of the invention is thus to develop a caterpillar track of a work machine so as to solve the above-mentioned problems. The objective of the invention is achieved with a caterpillar track which is characterised by what is disclosed in the independent claim. Preferred embodiments of the invention are disclosed in the dependent claims.

The invention is based on traction members placed on the inner surface side of the caterpillar track, which due to their structure adapt themselves to the surface of the work machine wheel which is against the caterpillar track.

The invention provides advantages. A caterpillar track which is provided with traction members and which is around a single wheel of a work machine may be left untightened too tight without losing the traction between the wheel and terrain, making the installation of a caterpillar track easy, but nevertheless achieving a non-slipping contact between the wheel and caterpillar track. In addition, a caterpillar track around a single wheel may clean itself because the caterpillar track has, due to missing excess tightness, the chance of a small movement towards the tyre surface and away from the tyre surface, allowed by the traction members in between. In the case of a bogie structure, good traction is achieved between the work machine wheels and the caterpillar track also under poor use conditions and in addition the traction members break the ice on the caterpillar track and therefore prevent the ice between the wheels and caterpillar track increasing the tension of the caterpillar track, so possible damages to the bogie structure and shafts may be avoided.

### Brief description of the drawings

The invention will now be described in more detail in connection with preferred embodiments and with reference to the accompanying drawings, in which:
Figure 1 shows caterpillar track provided with traction members around two wheels of a bogie structure.
Figure 2 shows caterpillar track provided with traction members for a single wheel of a work machine.

### Detailed description of the invention

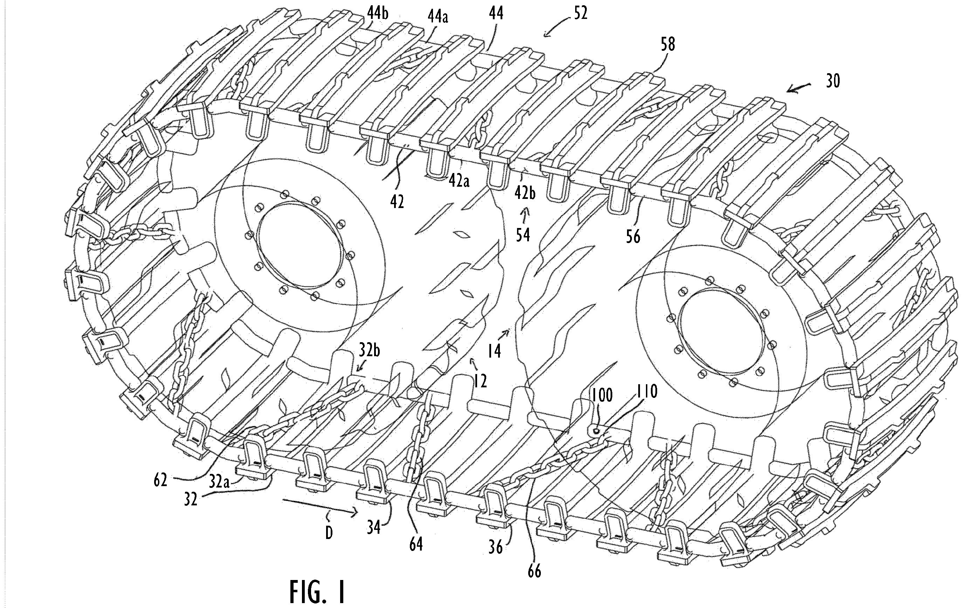

Figure 1 shows a bogie comprising two wheels 12, 14. A caterpillar track 30, that is, chain track, comprises a plurality of successive grouser shoes, such as grouser shoes 32, 34, 36, in the direction of movement D of the caterpillar track 30. The grouser shoes 32, 34, 36 may be metal plates that increase the contact surface area of the caterpillar track 30 and consequently that of the entire work machine in relation to the surface of the terrain, that is, in relation to the ground. The caterpillar track 30 comprises a support structure 42, 44 supporting the grouser shoes such as grouser shoes 32, 34, 36, to which they are fastened or otherwise supported.

The support structure 42, 44 of the caterpillar track 30 forms a closed circle so that the caterpillar track 30 forms a closed loop around the wheels 12, 14 of the work machine. When defined by the support structure 42, 44 and grouser shoes, such as 32, 34, 36, the caterpillar track 30 has an outer surface 52, inner surface 54, first side edge 56, and second side edge 58. The grouser shoes 32, 34, 36 of the caterpillar track 30 extend from the first side edge 56 of the caterpillar track to the second side edge 58, that is, the narrow ends of the grouser shoes, such as ends 32a, 32b of the grouser shoe 32, are at the side edges 56, 58 of the caterpillar track. The longitudinal direction of the grouser shoes 32, 34, 36 is perpendicularly transverse in relation to the direction of travel, illustrated by the arrow D, of the caterpillar track.

On the side of the inner surface 54 of the caterpillar track 30, the caterpillar track comprises traction members 62, 64, 66 implemented with a chain, cable, rope, or another form-conformable structure. This improves traction.

Chains or other similar traction members may reside entirely in the area between the grouser shoes, but in an embodiment the traction members are arranged at least partly overlapping, in other words, in alignment with the grouser shoes 32, 34, 36 of the caterpillar track 30. This way, the traction members 62, 64, 66 are between the wheels and caterpillar track 30 of the work machine, which increases friction i.e. achieves traction. The traction members, such as chains, are in the disclosed embodiment both overlapping, that is, in alignment with the grouser shoes and simultaneously in an area between two successive grouser shoes, as can be seen in the drawings.

It can be seen that the traction members 62, 64, 66 such as chains, cables, or ropes, extend in the direction of the side edges 56, 58 of the caterpillar track, so in the transverse direction of the caterpillar track, in such a manner in the disclosed embodiment that the traction members 62, 64, 66 extend in the direction of the side edges 56, 58 of the caterpillar track 30 so that a traction member obliquely crosses a grouser shoe in a direction differing from the perpendicular direction between the side edges 56, 58 of the caterpillar track, the perpendicular direction being the longitudinal direction of the grouser shoe. In this case, the traction member such as 62, 64, 66 is in alignment over a larger area, so overlapping with a grouser shoe, causing improved traction between a wheel and a grouser shoe of the caterpillar track 30.

Referring to the support structure 42,44 of the caterpillar track 30, supporting the grouser shoes such as 32, 34, 36, the support structure 42, 44 comprised by the caterpillar track 30 is a support chain structure comprising a chain structure 42,44 on both side edges 56, 58 of the caterpillar track. Both chain structures 42, 44 comprise successive chain elements 42a, 42b, 44a, 44b such as side links.

In such a case, the traction members 62, 64, 66, such as chains, cables, or ropes, are between the chain structures 42, 44 on different side edges 56, 58 of the caterpillar track 30 and are fastened to the chain elements 42a, 42b of the chain structures 42, 44. This facilitates fastening the traction members 32, 34, 36, because it is possible to utilise structures already existing in known caterpillar tracks as the other party of the fastening of the traction members 32, 34, 36.

It is also possible that the traction members are attached to the caterpillar track 30 on the inside surface 54 side of the caterpillar track in another manner, for example, so that (not shown) the traction members are fastened to the grouser shoes, to side guides of the caterpillar track (which, when the caterpillar track is rotating, run touching the top part of the side surface of the tyre, or past the top part of the side surface of the tyre), and it is also possible that there are specific fastening points made for the fastening of the traction members in, for example, the grouser shoes.

There are so many traction members in the track 30 that good traction is achieved between the wheel/wheels and caterpillar track 30 of the work machine, that is, in practice between the wheel/wheels and grouser shoes, on the inner surface 54 side of the caterpillar track 30.

There are traction members 62, 64, 66, such as chains, substantially over the entire area of the circumference/loop of the caterpillar track, as this results in even traction.

In addition to a chain, a traction member may be a cable, rope, or another traction member conforming well to the shape of a tyre, which achieves good traction between a tyre of a wheel provided with a tyre, and the caterpillar track 30. By means of successive links of a chain or flexibility of a wire or rope, a traction member has a form-conformable structure, that is, it is not stiff but is fixed by its fastening points at the ends, only, so the traction member is able to conform according to the surface between the tyre sides, which is towards the caterpillar track 30.

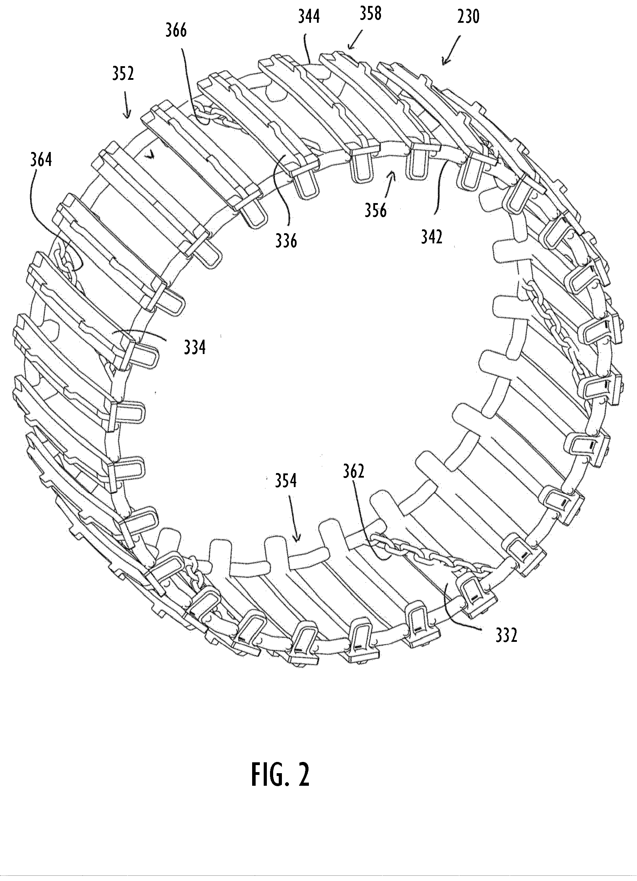

Figure 2 shows similar structures as described in the above with reference to Figure 1, but Figure 2 relates to a caterpillar track equipped with traction members for placement around a single wheel of a work machine. Figure 2 shows a caterpillar track 230 which has grouser shoes 332, 334, 336, side edges 356, 358, outer surface 352, and inner surface 354, and support structure 342, 344 of the caterpillar track.

As in Figure 1, Figure 2 also has traction members 362, 364, 366 implemented with a rope or a similar structure. As concerns the other parts, reference is made to the details shown in Figure 1.

The caterpillar track 30 has a direction of movement and a transverse direction. In the example of the drawings, the transverse direction of the caterpillar track is the same as the longitudinal direction of the grouser shoes such as 32, 34, 36. The transverse direction of the caterpillar track 30 is perpendicularly transverse in relation to the direction of movement of the caterpillar track 30. Depending on the direction of travel (forward, backward) of the work machine, the direction of movement of the caterpillar track may be the opposite, too, and it is naturally so that the caterpillar track 30 forming a closed loop has opposite directions of movement, too.

In a preferred embodiment, the caterpillar track 30 comprises traction members mutually directed in at least two different directions so that when examined from the same side edge of the caterpillar track (e.g. the first side edge 56), some of the traction members are directed obliquely towards the direction of movement of the caterpillar track and some other traction members are directed obliquely against the direction of movement of the caterpillar track 30. The same matter may also be expressed so that some of the traction members are directed to a different side in relation to the longitudinal direction of the caterpillar track 30 than some other traction members.

Expressed more precisely, in a preferred embodiment when examined from the same side edge of the caterpillar track 30, such as the side edge 56, the traction members obliquely directed towards the direction of movement are arranged alternately in relation to the traction members that are directed obliquely against the direction of movement. The same matter may also be expressed so that when examined from the same side edge of the caterpillar track 30, such as the side edge 56, the traction members directed on different sides in relation to the transverse direction of the caterpillar track 30 are arranged alternately.

The embodiments referred to in the above improve the traction uniformity and allow good traction regardless of which direction the work machine is travelling.

Relating to attaching the chains or other traction members, such as 62, 64, 66, in a preferred embodiment the caterpillar track 30 or a traction member comprised by it comprises a fastening arrangement 100, 110 for fastening or unfastening a traction member, such as the traction member 66 in Figure 1. In such a case, it is easily possible that the traction members are retrofittable and/or replaceable. To fasten traction members, the fastening arrangement 100, 110 may be implemented in a number of ways, such as a bolt, shackle, or a slot in the caterpillar track. The fastening arrangement may be similar at both ends of the traction members such as a chain 66.

In an embodiment, the chain or similar traction members has some slack in it, that is, the chain is slightly longer than the direct distance between the chain fastening points of the caterpillar track 30. In such a case, traction is more easily achieved.

## Claims

1. A caterpillar track of a work machine, comprising a support structure (42, 44) to be formed into a loop and a plurality of successive grouser shoes (32, 34, 36) supported by the support structure, and the caterpillar track (30) having an outer surface (52), inner surface (54), a first side edge (56), and a second side edge (58), **characterized in that** the caterpillar track (30) provided with the grouser shoes (32, 34, 36) comprises, on the side of the inner surface (54) of the caterpillar track (30), traction members (62, 64, 66) implemented by a chain, cable, rope, or another form-conformable structure, which are arranged at least partly overlapping with the grouser shoes (32, 34, 36) of the caterpillar track (30).

2. A caterpillar track as claimed in claim 1, wherein the traction members (62, 64, 66) extend in a direction between the side edges (56, 58) of the caterpillar track (30).

3. A caterpillar track as claimed in claim 1 or 2, wherein the traction members (62, 64, 66) extend in the direction between the side edges (56, 58) of the caterpillar track so that a traction member (62, 64, 66) obliquely crosses a grouser shoe in a direction differing from a perpendicular direction between the side edges (56, 58) of the caterpillar track (30), the perpendicular direction being a longitudinal direction of the grouser shoe.

4. A caterpillar track as claimed in any one of the preceding claims 1 to 3, wherein the support structure (42,44) comprised in the caterpillar track (30) is a support chain structure comprising a chain structure (42, 44) on both side edges (56, 58) of the caterpillar track (30), both of the chain structures (42,44) comprising successive chain elements (42a, 42b, 44a, 44b), and wherein the traction members (62, 64, 66) reside between the chain structures (42, 44) on different side edges (56, 58) of the caterpillar track (30) and are fastened to the chain elements (42a, 42b, 44a, 44b) of the chain structures (42, 44).

5. A caterpillar track as claimed in any one of the preceding claims 1 to 4, having a transverse direction and a direction of travel perpendicularly transverse in relation thereto, wherein the caterpillar track (30) comprises traction members mutually directed in at least two different directions so that when examined from the same side edge (56 or 58) of the caterpillar track (30), some of the traction members are directed obliquely towards the direction of movement of the caterpillar track (30) and some other traction members are directed obliquely against the direction of movement of the caterpillar track (30).

6. A caterpillar track as claimed in claim 5, wherein the traction members obliquely directed towards the direction of movement are arranged alternately in relation to the traction members that are directed obliquely against the direction of movement, when examined from the same side edge of the caterpillar track.

7. A caterpillar track as claimed in any one of the preceding claims 1 to 6, wherein the caterpillar track (30) or traction member (62, 64, 66) comprised in it comprises a fastening arrangement (100, 110) for fastening and unfastening the traction member.

## Patentansprüche

1. Raupenkette einer Arbeitsmaschine, die eine Stützstruktur (42, 44), die zu einer Schleife zu bilden ist, und eine Vielzahl von aufeinanderfolgenden Stegplatten (32, 34, 36), die von der Stützstruktur gestützt werden, umfasst, und wobei die Raupenkette (30) eine Außenfläche (52), eine Innenfläche (54), eine erste Seitenkante (56) und eine zweite Seitenkante (58) aufweist, **dadurch gekennzeichnet, dass** die Raupenkette (30), die mit den Stegplatten (32, 34, 36) versehen ist, auf der Seite der Innenfläche (54) der Raupenkette (30) Traktionskomponenten (62, 64, 66) umfasst, die durch eine Kette, einen Seilzug, ein Seil oder eine andere formanpassbare Struktur implementiert werden und mindestens teilweise mit den Stegplatten (32, 34, 36) der Raupenkette (30) überlappend angeordnet sind.

2. Raupenkette nach Anspruch 1, wobei sich die Traktionskomponenten (62, 64, 66) in eine Richtung zwischen den Seitenkanten (56, 58) der Raupenkette (30) erstrecken.

3. Raupenkette nach Anspruch 1 oder 2, wobei sich die Traktionskomponenten (62, 64, 66) in die Richtung zwischen den Seitenkanten (56, 58) der Raupenkette erstrecken, derart, dass eine Traktionskomponente (62, 64, 66) eine Stegplatte in eine Richtung, die sich von der senkrechten Richtung zwischen den Seitenkanten (56, 58) der Raupenkette (30) unterscheidet, schräg kreuzt, wobei die senkrechte Richtung eine Längsrichtung der Stegplatte ist.

4. Raupenkette nach einem der vorhergehenden Ansprüche 1 bis 3, wobei die Stützstruktur (42, 44), die in der Raupenkette (30) umfasst ist, eine Stützkettenstruktur ist, die eine Kettenstruktur (42, 44) an beiden Seitenkanten (56, 58) der Raupenkette (30) ist, wobei beide Kettenstrukturen (42, 44) aufeinanderfolgende Kettenelemente (42a, 42b, 44a, 44b) umfassen, und wobei sich die Traktionskomponenten (62, 64, 66) zwischen den Kettenstrukturen (42, 44) an verschiedenen Seitenkanten (56, 58) der Raupenkette (30) befinden und an den Kettenelementen (42a, 42b, 44a, 44b) der Kettenstrukturen (42, 44) befestigt sind.

5. Raupenkette nach einem der vorhergehenden Ansprüche 1 bis 4, die eine Querrichtung und eine Fahrtrichtung senkrecht quer dazu umfasst, wobei die Raupenkette (30) Traktionskomponenten umfasst, die gegenseitig in mindestens zwei verschiedene Richtungen gerichtet sind, derart, dass von derselben Seitenkante (56 oder 58) der Raupenkette (30) aus gesehen einige der Traktionskomponenten schräg zur Bewegungsrichtung der Raupenkette (30) gerichtet sind und einige andere Traktionskomponenten schräg gegen die Bewegungsrichtung der Raupenkette (30) gerichtet sind.

6. Raupenkette nach Anspruch 5, wobei von derselben Seitenkante der Raupenkette aus gesehen die Traktionskomponenten, die schräg zur Bewegungsrichtung gerichtet sind, mit Bezug auf die Traktionskomponenten, die schräg gegen die Bewegungsrichtung gerichtet sind, abwechselnd angeordnet sind.

7. Raupenkette nach einem der vorhergehenden Ansprüche 1 bis 6, wobei die Raupenkette (30) oder eine Traktionskomponente (62, 64, 66), die darin umfasst ist, eine Befestigungsanordnung (100, 110) zum Befestigen und Lösen der Traktionskomponente umfasst.

## Revendications

1. Chenille d'une machine de travail, comprenant une structure de support (42, 44) destinée à être formée en une boucle et une pluralité de tuiles à crampon (32, 34, 36) supportées par la structure de support, et la chenille (30) ayant une surface externe (52), une surface interne (54), un premier bord latéral (56) et un second bord latéral (58), **caractérisée en ce que** la chenille (30) prévue avec les tuiles à crampon (32, 34, 36) comprend, sur le côté de la surface interne (54) de la chenille (30), des éléments de traction (62, 64, 66) mis en œuvre par une chaîne, un câble, une corde ou une autre structure adaptable à la forme, qui sont agencés au moins partiellement en chevauchement avec les tuiles à crampon (32, 34, 36) de la chenille (30).

2. Chenille selon la revendication 1, dans laquelle les éléments de traction (62, 64, 66) s'étendent dans une direction entre les bords latéraux (56, 58) de la chenille (30).

3. Chenille selon la revendication 1 ou 2, dans laquelle les éléments de traction (62, 64, 66) s'étendent dans la direction entre les bords latéraux (56, 58) de la chenille de sorte qu'un élément de traction (62, 64, 66) traverse obliquement une tuile à crampon dans une direction différant d'une direction perpendiculaire entre les bords latéraux (56, 58) de la chenille (30), la direction perpendiculaire étant une direction longitudinale de la tuile à crampon.

4. Chenille selon l'une quelconque des revendications 1 à 3, dans laquelle la structure de support (42, 44) comprise dans la chenille (30) est une structure de chaîne de support comprenant une structure de chaîne (42, 44) sur les deux bords latéraux (56, 58) de la chenille (30), les deux structures de chaîne (42, 44) comprenant des éléments de chaîne (42a, 42b, 44a, 44b) successifs et dans lequel les éléments de traction (62, 64, 66) résident entre les structures de chaîne (42, 44) sur différents bords latéraux (56, 58) de la chenille (30) et sont fixés sur les éléments de chaîne (42a, 42b, 44a, 44b) des structures de chaîne (42, 44).

5. Chenille selon l'une quelconque des revendications 1 à 4, ayant une direction transversale et une direction de déplacement perpendiculairement transversale par rapport à cette dernière, dans laquelle la chenille (30) comprend des éléments de traction mutuellement dirigés dans au moins deux directions différentes de sorte que lorsqu'ils sont examinés depuis le même bord latéral (56 ou 58) de la chenille (30), certains des éléments de traction sont dirigés obliquement vers la direction de mouvement de la chenille (30) et certains autres éléments de traction sont dirigés obliquement contre la direction de mouvement de la chenille (30).

6. Chenille selon la revendication 5, dans laquelle les éléments de traction obliquement dirigés vers la direction de mouvement sont agencés de manière alternée par rapport aux éléments de traction qui sont dirigés de manière oblique contre la direction de mouvement, lorsqu'ils sont examinés à partir du même bord latéral de la chenille.

7. Chenille selon l'une quelconque des revendications 1 à 6, dans laquelle la chenille (30) ou l'élément de traction (62, 64, 66) compris dans cette dernière, comprend un agencement de fixation (100, 110) pour fixer et détacher l'élément de traction.
